Europäisches Patentamt

European Patent Office

Office européen des brevets

(19)

(11) Publication number : **0 481 724 A2**

# (12) EUROPEAN PATENT APPLICATION

(21) Application number : **91309479.3**

(22) Date of filing : **15.10.91**

(51) Int. Cl.⁵ : **G02B 6/44**

(30) Priority : **15.10.90 US 597478**

(43) Date of publication of application :
**22.04.92 Bulletin 92/17**

(84) Designated Contracting States :
**DE FR GB IT SE**

(71) Applicant : **W.L. GORE & ASSOCIATES, INC.
551 Paper Mill Road P.O. Box 9206
Newark, DE 19714 (US)**

(72) Inventor : **Cedrone, Alfredo
4104, Hyridge Drive
Austin, Texas 78759 (US)**

(74) Representative : **Jones, Andrée Zena et al
CRUIKSHANK & FAIRWEATHER 19 Royal
Exchange Square
Glasgow, G1 3AE Scotland (GB)**

(54) Terminated high-strength fiber optic cables and method for termination thereof.

(57) An optical fiber cable is provided having a loop (9) of strong braided sheath anchored within it to provide terminal strength and a protective tube surrounding the optical fibers of the cable as they exit the cable through a gap (5) in the sheath for termination. The protective tube (11) allows retention of signal quality of optical fibers by preventing damage to coating layers on the fibers passing through the braided sheath which may be under high tension.

EP 0 481 724 A2

This invention pertains to high-strength optical fiber cables and methods of terminating them.

Transmission lines or optical waveguides for carrying a beam of light as a means for communicating signals or data through a glass or polymer fiber are well known in the art. Optical fibers of glass are coated with layers of glass and polymers of various properties of hardness, softness, smoothness, flexibility, adherence to the fiber, and refractive index to mitigate the effects of surface imperfections of the fiber and stresses of bending and contact with other materials during manufacture, installation, and use. Similarly, plastic optical fibers are coated for equivalent reasons. Either glass or plastic fibers are said to be buffered against the environment and events which can result in signal loss by their effect on the fiber.

When optical fibers are manufactured into data or signal transmitting cables, the buffered fibers are sometimes provided with high-strength members, such as braided jackets, to provide strength to the cable so it may be unreeled, pulled, strung from supports, used as a tow cable, and otherwise handled physically during manufacture, installation, or use for its intended purpose of transmitting signals. One kind of useful strength member is a braided sheath of strong polymer fibers surrounding the optical fiber cable. The current method for terminating such a cable is by pulling out the optical fiber through openings in the weave of the braid to be terminated. The braid can then be looped around a termination pin and the free end of the braid attached to itself to form a loop in the braid to provide a high-strength termination of the cable. The problem remaining is that as the braid is placed under strain, the effect of pressure of the weave of the braid on the optical fiber is one of cutting into the protective layers of the optical fiber with resultant disastrous impact upon the quality of optical performance of the cable. The invention provides a solution to this problem by eliminating the shearing action of the braid on the optical fibers.

The invention comprises a protective means surrounding the optical fibers of an optical fiber cable at the point where the fibers pass through a gap in the weave of the strong protective braid surrounding the optical fibres which form the core of the cable when those optical fibers are passed out of the cable for termination, a terminated optical fiber cable including the protective means, and a process for terminating a braided sheath of an optical fiber cable. The protective means for the optical fibers comprises a protective tube inserted through a gap in the weave of the protective braid to surround the optical fibers as they pass out of the cable. The terminating process comprises passing the fibers through an opening in the weave of the braided sheath back into the cable between the core and the sheath of the cable to anchor them.

An embodiment of the present invention will now be described, by way of example, with reference to the accompanying drawings in which:-

Fig. 1 describes a cable of the invention with the loop formed in the braid hooked over a termination pin and optical fibers of the cable extending from the protective tube for optical termination.

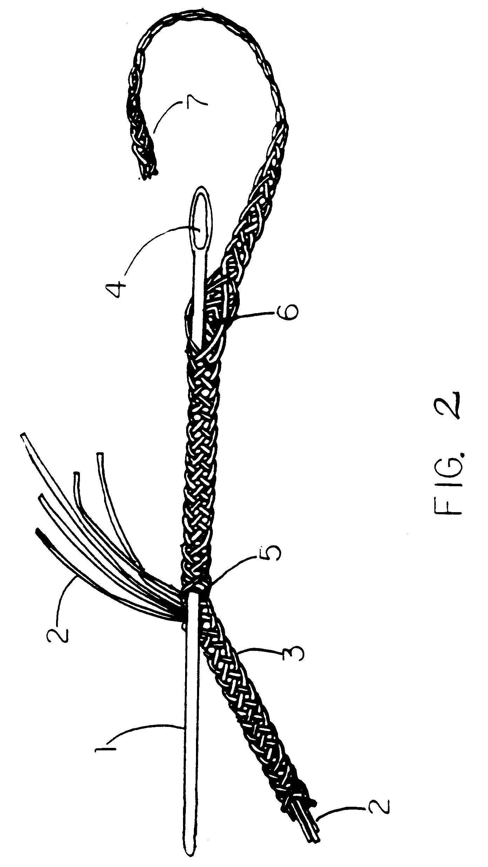

Fig. 2 shows a cable of the invention with optical fibers of the cable exiting an opening in the cable and a tool in place in the braid of the cable prior to insertion of the end of the braid in the eye of the tool.

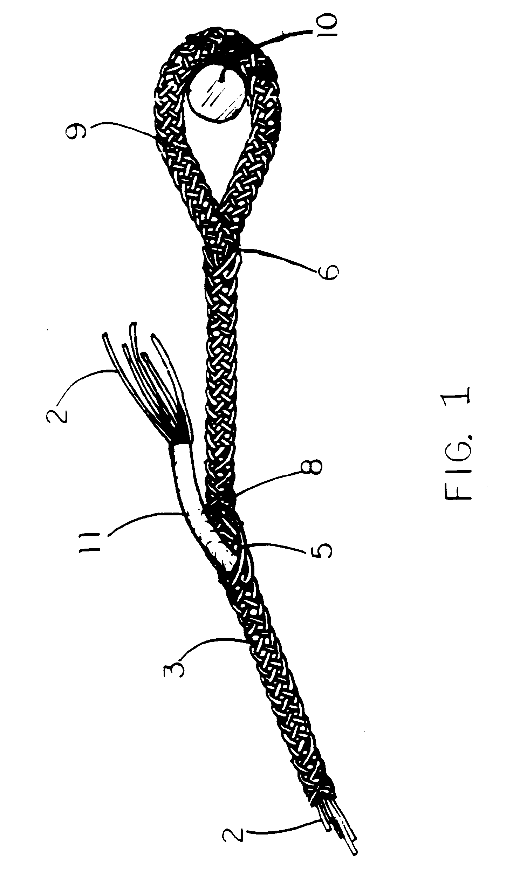

Referring to Fig. 1 of the drawings, an optical fiber cable having optical fibers protected by a braided sheath 3. During termination of the cable, the optical fibers 2 are withdrawn through a first opening 5 in the braided sheath 3 for connection of the free ends of the optical fibers 2 to a termination point. As shown in Fig. 1, a second opening 6 is formed in the braided sheath 3 and the free end 7 of the braided sheath 3 is formed into a loop 9 around a termination pin 10 and passed back into the second opening 6 in the braided sheath 3 thereby to become anchored within the braided sheath 3 to provide high longitudinal strength to the terminated cable.

A protective means in the form of a tube 11 is provided which acts as a sleeve to protect the optical fibers 3 at their point of exit from the braid and comprises an suitable self-supporting material, such as copper or stainless steel metal tubing or a plastics material, such as acetylene-butadiene-styrene (ABS), polyvinyl chloride, polysulfone, polycarbonate, or polyester.

The tube 11 is provided around the bundle of optical fibers 2 comprises the signal transmitting portion of the cable, at a point where the fibers emerge from the braiding of the sheath 3, the remaining length of the braiding being continued to provide material for passing around the termination pin 10 to anchor the cable. Alternatively, a few inches from the end of the cable, the first opening 5 is made in the braided sheath 3 by separating the braid fibers at that point. The optical fibers 2 of the cable are carefully pulled out of the cable through the first opening 5, then a short section of the stiff, hollow tube 11 passed over the optical fibers 2 of the cable and the end of the tube is forced through the first opening 5 into the interior of the cable to provide a protective sheath for the optical fibers passing out of opening 5.

The end 7 of the loop of braided sheath left after the ends of optical fibers 2 have been extracted may be folded over and clamped to itself to anchor the end of the cable, according to the conventional manner. However, according to the present invention, a preferred method for anchoring an end of a cable has been found. The long slim tool 1 is passed into the braided sheath with the eye 4 at the leading end. About mid point between opening 5 and the end of the braid material a second opening 6 in the sheath similarly to the opening 5 is formed by carefully separating the braid of the sheath at that point. End 7 of the braided sheath is inserted in the eye 4 of the tool 1. The tool 1 is then withdrawn from the sheath, pulling end 7 of braid 3 inside the sheath through the second opening 6 to a point near the first opening 5, before withdrawing tool 1 from the opening 5. The braid is now looped back within itself and is firmly held by the material comprising the braid. When tension is applied to the loop 9 of the braided sheath, the sheath tightly grips the fibers of the end of sheath received within it; the stronger the pull, the tighter the grip. At the same time, the tube 11 protects the optical fibers 2 from being constricted at the opening 5, to avoid the protective coatings being permanently or temporarily damaged with resultant loss of signal quality in the optical fibers.

Alternatively, the loop 9 in the end of the braided sheath may be formed first in the termination process, then the tube 11 may be placed around fibers 2 and forced into the cable through the first opening 5.

Braid materials for providing tension and torsional strength to the cable may be selected from high-strength polymer fibers, such as a polyester fiber known as Spectrofiber*, manufactured by Allied Chemical Corporation, or Vectran* fiber, a liquid crystal polymer manufactured by Hoechst Celanese Corporation and having the polyester structure

$$[-O-C_6H_4-CO-]_x \ [-O-C_{10}H_6-CO-]_y,$$

where $-O-C_6H_4-CO-$ is a parahydroxybenzenecarbonyl group and $-O-C_{10}H_6-CO-$ is a 6-hydroxy-2-naphthalenecarbonyl group. Also useful may be Kevlar* polyaramid fibers, manufactured by E.I. DuPont de Nemours & Co. Any adequately strong polymer fiber may be used as a braided sheath fiber material.

The tube 11 may be anchored in place in the cable by affixing the outer end of the tube 11 to the cable by an adhesive strip wrapped around the tube 11 and the cable. Other alternative methods for holding tube 11 in place may be used, if preferred.

Loop 9 of the cable may then be looped over the termination pin 10 or the like to provide a strong cable termination and optical fibers 2 may now be optically terminated.

The methods and the cable according to the invention are useful whenever strength is demanded for an optical fiber cable which may be extended a considerable distance between attachment points, such as the length of a well-logging cable to downhole instrumentation, to link underwater surveillance instruments and vehicles, or in instrumentation towed behind an aircraft, for example.

## Claims

1.  A terminated optical fiber cable including a braided sheath (9) surrounding one or more optical fibers (2), having protective means (11) surrounding the optical fibers and passing through an opening in the braid of said braided sheath.

2.  An optical fiber cable of Claim 1 wherein said protective means comprises a hollow tube (11).

3.  An optical fiber cable of Claim 2 wherein said tube comprises metal or plastics material.

4.  An optical fiber cable of Claim 1 or 2 having a loop formed in the end of said braided sheath (9) for anchoring said cable to a connector.

5.  A process for terminating a braided sheath surrounding a cable comprising the steps of:
    (a) separating the fibers of said sheath at a point short distance from the end of said sheath to form a first opening in said sheath;
    (b) extracting said cable from said opening in said sheath;
    (c) inserting a thin narrow tool (1), having an eye (4) at one end, eye first through said first opening in said braided sheath to a point about mid point between the end of said sheath and said first opening and then out of said sheath through a second opening (6) formed therein by separating the fibers of said braided sheath;
    (d) threading the end of said braided sheath through the eye of said tool;
    (e) pulling said end of said braided sheath inside said braided sheath through said second opening (6) to leave said end of braided sheath received inside said braided sheath and a loop in the end of said braided sheath as said tool is withdrawn from said first opening in said braided sheath;
    (f) passing said cable end into said protective means (11),
    (g) sliding said protective means (11) over the end of and around said cable to said first opening in said braided sheath;

* indicates a Registered Trade Mark

(h) inserting said protective means through said first opening (5) to reside partially inside said braided sheath while surrounding said cable;

(i) anchoring said protective means to said braided sheath to hold said protective means in place.

6. A process of Claim 5 also including anchoring said loop of said braided sheath over a connector pin (10) and terminating said cable.

7. A process for terminating a braided sheath surrounding a cable comprising the steps of:

(a) separating the fibers of said sheath at a point a short distance from the end of said sheath to form a first opening (5) in said sheath;

(b) extracting said cable from said opening in said sheath;

(c) forming a second opening (6) in said sheath at a point about mid point between the end of the sheath and said first opening (5) by separating the fibers of said braided sheath;

(d) pulling said end of said braided sheath inside said braided sheath through said second opening (6) to leave said end of braided sheath received inside said braided sheath and to form a loop in the end of said braided sheath;

(e) passing said cable end into protective means (11) adapted to surround optical fibers of said cable;

(f) sliding said protective means (11) over the end of and around said cable to said first opening in said braided sheath;

(g) inserting said protective means through said first opening (5) to reside partially inside said braided sheath while surrounding said cable;

(h) anchoring said protective means to said braided sheath to hold said protective means in place.

FIG. 1

EP 0 481 724 A2

FIG. 2